# EUROPÄISCHE PATENTANMELDUNG

(11) **EP 3 712 241 A1**
(43) Veröffentlichungstag der Anmeldung: **23.09.2020**
(21) Anmeldenummer: 20163931.7
(22) Anmeldetag: 18.03.2020
(51) Int. Cl.: C12H 6/02, B01D 3/02

(54) **BRENNANLAGE**

(30) Priorität: 21.03.2019 DE 102019107239
(71) Anmelder: Lübbecke-Grünhagen Hermann, 38442 Wolfsburg (DE)
(72) Erfinder: Lübbecke-Grünhagen Hermann, 38442 Wolfsburg (DE)
(74) Vertreter: Schneider, Peter Christian

(57) **Zusammenfassung**

Die Erfindung betrifft eine Brennanlage mit einer Brennblase und einem der Brennblase nachgeordneten Brennkolben, wobei der Brennkolben als ein Doppelkolben ausgebildet ist, der einen ersten zylindrischen Kolben aufweist, der über eine erste Verengung mit der Brennblase und über ein zylindrisches Übergangsstück mit einem zweiten zylindrischen Kolben verbunden ist, und wobei eine Luftkühlvorrichtung angeordnet ist, die in einer oberen Abdeckung einen Ventilator zum Absaugen von Luft aus einem dem zweiten Kolben benachbarten ringförmigen oberen Kühlkanal aufweist.

Die Erfindung ist dadurch gekennzeichnet, dass der Brennkolben quer zu seiner Vertikalachse beabstandet zu Seitenwandungen seiner Kolben von einer Umhüllung umschlossen ist, dass die Umhüllung eine die Kolben ringförmig umschließende Kühlkammer mit einem zwischen Umhüllung und Kolben angeordneten Kühlkanal bildet, dass die Kühlkammer im Bereich des Übergangsstückes eine mit Durchgangsöffnungen versehene Zwischenwandung aufweist, durch die die Kühlkammer in eine dem ersten Kolben zugeordnete untere Kühlkammer mit einem unteren Kühlkanal und eine dem zweiten Kolben zugeordnete obere Kühlkammer mit dem oberen Kühlkanal unterteilt ist, dass die obere Kühlkammer zwischen dem oberen Klöpperboden und der oberen Abdeckung eine in vertikaler Richtung verschiebbare obere Abschlusswand mit einer Zentralöffnung zum Ventilator hin aufweist, dass die obere Abschlusswand auf die Durchgangsöffnungen der Zwischenwandung abgestimmte Öffnungen aufweist, die zur Zwischenwandung hin mit vertikalen Lüftungsrohren fest verbunden sind, und dass die Durchgangsöffnungen der Zwischenwandung über die freien Enden der Lüftungsrohre direkt mit den Öffnungen der oberen Abschlusswand verbindbar sind.

## Beschreibung

### Gebiet der Erfindung

Die Erfindung betrifft eine Brennanlage mit einer Brennblase und einem der Brennblase nachgeordneten Brennkolben, wobei der Brennkolben als ein Doppelkolben ausgebildet ist, der einen ersten zylindrischen Kolben aufweist, der über eine erste Verengung mit der Brennblase und über ein zylindrisches Übergangsstück mit einem zweiten zylindrischen Kolben verbunden ist, und wobei eine Luftkühlvorrichtung angeordnet ist, die oberhalb eines den zweiten zylindrischen Kolben in vertikaler Richtung oben abschließenden oberen Klöpperbodens in einer oberen Abdeckung einen Ventilator zum Absaugen von Luft aus einem dem zweiten Kolben benachbarten ringförmigen oberen Kühlkanal aufweist.

### Stand der Technik

Aus der DE 20 2013 105 168 U1 ist eine Brennanlage mit einer Brennblase und einem der Brennblase nachgeordneten Brennkolben, der als ein Doppelkolben ausgebildet ist, bekannt. Der Doppelkolben weist einen ersten zylindrischen Kolben auf, der über eine erste Verengung mit der Brennblase und über ein zylindrisches Übergangsstück mit einem zweiten zylindrischen Kolben verbunden ist. Dabei ist weiter eine Luftkühlvorrichtung bekannt, die oberhalb eines den zweiten zylindrischen Kolben in vertikaler Richtung oben abschließenden oberen Klöpperbodens in einer oberen Abdeckung einen Ventilator zum Absaugen von Luft aus einem dem zweiten Kolben benachbarten ringförmigen oberen Kühlkanal aufweist.

Nachteilig bei der bekannten Vorrichtung, die sich grundsätzlich bewährt hat, ist, dass insbesondere im Bereich des ersten zylindrischen Kolbens die Belüftung schwierig zu regulieren und zu kontrollieren ist.

### Aufgabenstellung

Es ist die Aufgabe der vorliegenden Erfindung, im gesamten Bereich des Brennkolbens die Belüftung so zu verbessern, dass sie leichter kontrolliert und reguliert werden kann.

### Darlegung der Erfindung

Diese Aufgabe wird in Verbindung mit den Merkmalen des Oberbegriffs von Anspruch 1 dadurch gelöst, dass der Brennkolben quer zu seiner Vertikalachse beabstandet zu Seitenwandungen seiner Kolben von einer Umhüllung umschlossen ist, dass die Umhüllung eine die Kolben ringförmig umschließende Kühlkammer mit einem zwischen Umhüllung und Kolben angeordneten Kühlkanal bildet, dass die Kühlkammer im Bereich des Übergangsstückes eine mit Durchgangsöffnungen versehene Zwischenwandung aufweist, durch die die Kühlkammer in eine dem ersten Kolben zugeordnete untere Kühlkammer mit einem unteren Kühlkanal und eine dem zweiten Kolben zugeordnete obere Kühlkammer mit dem oberen Kühlkanal unterteilt ist, dass die obere Kühlkammer zwischen dem oberen (vierten) Klöpperboden und der oberen Abdeckung eine in vertikaler Richtung verschiebbare obere Abschlusswand mit einer Zentralöffnung zum Ventilator hin aufweist, dass die obere Abschlusswand auf die Durchgangsöffnungen der Zwischenwandung abgestimmte Öffnungen aufweist, die zur Zwischenwandung hin mit vertikalen Lüftungsrohren fest verbunden sind, und dass die Durchgangsöffnungen der Zwischenwandung über die freien Enden der Lüftungsrohre direkt mit den Öffnungen der oberen Abschlusswand verbindbar sind.

Dadurch, dass der komplette Brennkolben von einer Umhüllung umschlossen ist, die einen Kühlkanal zwischen Brennkolben und Umhüllung bildet, lässt sich der gesamte Brennkolben, d.h. erster Kolben, Übergangsstück und zweiter Kolben, gezielt belüften.

Dadurch, dass die Kühlkammer im Bereich des Übergangsstückes eine mit Durchgangsöffnungen versehene Zwischenwandung aufweist, durch die die Kühlkammer in eine dem ersten Kolben zugeordnete untere Kühlkammer mit einem unteren Kühlkanal und eine dem zweiten Kolben zugeordnete obere Kühlkammer mit dem oberen Kühlkanal unterteilt ist, wird eine kontrollierte, schonende und unterschiedliche Belüftung vom ersten und zweiten Kolben ermöglicht. Luft aus der unteren Kühlkammer kann über die Durchgangsöffnungen der oberen Kühlkammer zugeführt werden. Durch den Verzicht auf eine Wasserkühlung des Kolbens werden durch Wasserkühlung häufig auftretende Temperaturbrüche gänzlich vermieden. Die Dephlegmation lässt sich erheblich verbessern. Zudem werden langkettige Aromaverbindungen (Ester) weniger zerstört. Durch die bessere Gleichmäßigkeit und bessere Kontinuität des Brennvorganges insgesamt wird eine größere, verbesserte Aromafülle erzielt.

Dadurch, dass zwischen dem oberen Klöpperboden und der oberen Abdeckung eine in vertikaler Richtung verschiebbare obere Abschlusswand mit einer Zentralöffnung zum Ventilator hin angeordnet ist und dass die obere Abschlusswand auf die Durchgangsöffnungen der Zwischenwandung abgestimmte Öffnungen aufweist, die zur Zwischenwandung hin mit vertikalen Lüftungsrohren fest verbunden sind, und dass die Öffnungen der Zwischenwandung über die freien Enden der Lüftungsrohre direkt mit den Öffnungen der oberen Abschlusswand verbindbar sind, wird einerseits eine regelbare Belüftung der oberen Kühlkammer zumindest teilweise über die untere Kühlkammer ermöglicht und andererseits ist es möglich, die Abluft der unteren Kühlkammer durch die Lüftungsrohre ohne Vermischung in der oberen Kühlkammer durch diese hindurchzuleiten.

Bevorzugte Ausführungsformen sind Gegenstand der abhängigen Ansprüche.

Weiterhin vorteilhaft kann den Kühlkammern getrennt voneinander über seitliche Zuführkanäle Zuluft zugeführt werden. Insbesondere weist nach einer bevorzugten Ausführungsform der Erfindung die Luftkühlvorrichtung mindestens einen Ventilator zum Zuführen von Zuluft über die seitlichen Zuführkanäle auf. Die Zuführung von Zuluft und die Ableitung von Abluft können dabei durch eine Regeleinrichtung regelbar sein. Insbesondere können die seitlichen Zuführkanäle der Luftkühlvorrichtung Stellventile aufweisen, die durch die Regeleinrichtung regelbar sind.

Gemäß einer weiteren bevorzugten Ausführungsform der Erfindung weist die obere Abdeckung mindestens einen Stellmotor zum Verschieben der oberen Abschlusswand in vertikaler Richtung auf. Der Stellmotor kann beispielsweise ein Elektromotor oder auch eine elektrohydraulische oder pneumatische Verstelleinrichtung sein. Auch kann der Stellmotor über die Regeleinrichtung regelbar sein.

Nach einer bevorzugten Ausführungsform der Erfindung ist bei einer in vertikaler Richtung oberen Stellung der oberen Abschlusswand Luft aus der unteren Kühlkammer über die Durchgangsöffnungen der Zwischenwandung in die obere Kühlkammer ableitbar. Aus der unteren Kühlkammer in die obere Kühlkammer abgesaugte Luft kann sich dabei mit der in der oberen Kühlkammer strömenden Zuluft und Abluft vermischen.

Bei einer in vertikaler Richtung unteren Stellung der oberen Abschlusswand ist Luft aus der unteren Kühlkammer über die von den freien Enden der vertikalen Lüftungsrohre abgedeckten Durchgangsöffnungen der Zwischenwandung direkt über die Lüftungsrohre durch die obere Kühlkammer hindurch ableitbar. Dabei wird eine Vermischung der Luft aus der unteren Kühlkammer mit der Luft der oberen Kühlkammer, die über die seitlichen Zuführkanäle als Zuluft der oberen Kühlkammer zugeführt wird, zuverlässig vermieden.

Nach einer weiteren bevorzugten Ausführungsform der Erfindung ist den Kühlkanälen über mindestens zwei Ventilatoren Zuluft zuführbar. Den Kühlkanälen kann aber auch über drei oder vier Ventilatoren Zuluft zugeführt werden.

Nach einer weiteren bevorzugten Ausführungsform der Erfindung ist die Leistung des Ventilators in der Abdeckung größer als die Leistung des mindestens einen Ventilators zur Zuführung von Luft in die Kühlkanäle. Dadurch kann in den Kühlkanälen ein Unterdruck erzeugt werden. Dabei ist die Leistung der Ventilatoren durch eine Regeleinrichtung regelbar. Sollte beispielsweise der zweite Kolben in der Dephlegmation gehemmt sein, weil die Luft zu warm wird, so muss die Leistung der Ventilatoren erhöht und damit die Kühlung verstärkt werden. Es kann aber auch grundsätzlich weniger Dampf in die Brennanlage bzw. den Doppelkolben geschickt werden.

Gemäß einer weiteren bevorzugten Ausführungsform der Erfindung weist das zylindrische Übergangsstück einen Übergangsdurchmesser auf, der kleiner ist als der erste Kolbendurchmesser des ersten Kolbens und der kleiner ist als der zweite Kolbendurchmesser des zweiten Kolbens, wobei im Übergang vom ersten Kolben zum Übergangsstück eine zweite Verengung und im Übergang vom Übergangsstück zum zweiten Kolben eine dritte Verengung gebildet wird. Dabei kann zwischen dem ersten Kolben und dem zylindrischen Übergangsstück ein zweiter Klöpperboden und zwischen dem zylindrischen Übergangsstück und dem zweiten Kolben ein dritter Klöpperboden angeordnet sein. Ein erster oder unterer Klöpperboden kann zwischen ersten Kolben und der Brennblase ausgebildet sein, während der obere oder vierte Klöpperboden den zweiten Kolben in vertikaler Richtung oben abschließt.

Durch die zweite und insbesondere dritte Verengung wird sichergestellt, dass der Alkoholdampf nicht sofort an dem obersten Boden des zweiten Kolbens entweichen kann, sondern durch die Verengungen gebremst wird. Zugleich wird eine starke Sogwirkung in der Brennblase vermieden. Damit verweilt der Alkoholdampf ausreichend lange in dem Doppelkolben, so dass eine ausreichende Dephlegmation ermöglicht wird.

Gemäß einer weiteren bevorzugten Ausführungsform der Erfindung ist der zweite Kolben über eine an seinem oberen Ende angeordnete Destillatleitung mit einem Nachkühler verbunden. In dem Nachkühler werden über die Destillatleitung zugeführte Dämpfe unter den Siedepunkt abgekühlt, so dass sie verflüssigen. Das gewonnene Destillat kann als Vorlauf, Mittellauf und Nachlauf entnommen werden.

Weitere Einzelheiten und Vorteile der Erfindung ergeben sich aus der nachfolgenden speziellen Beschreibung und den Zeichnungen.

### Kurzbeschreibung der Zeichnungen

Es zeigen:

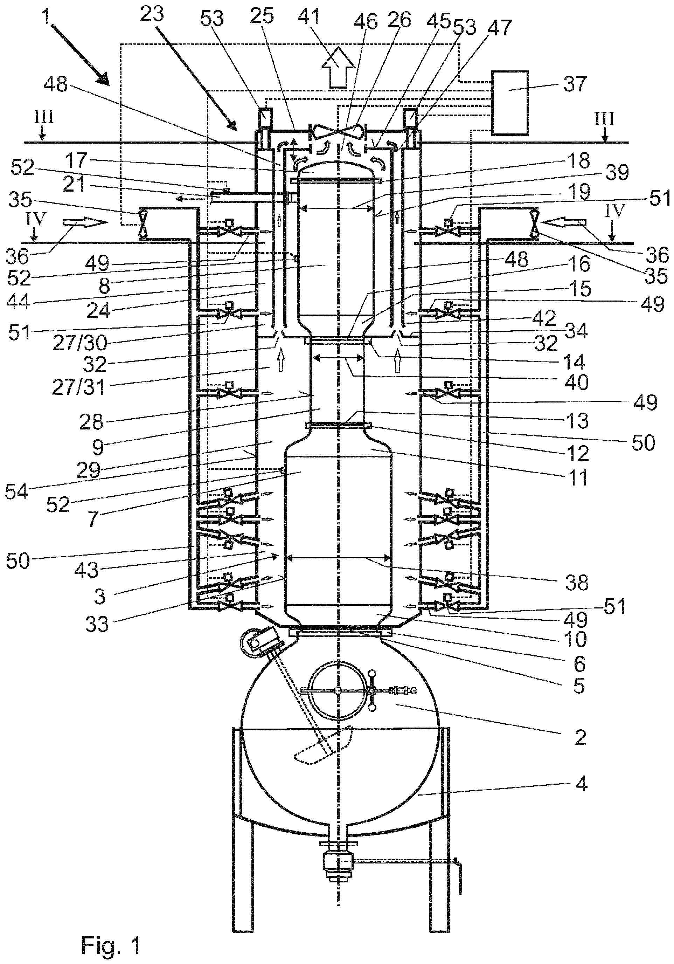

- Figur 1:: eine Seitenansicht einer Brennanlage mit einer aufgeschnittenen Luftkühlvorrichtung ;

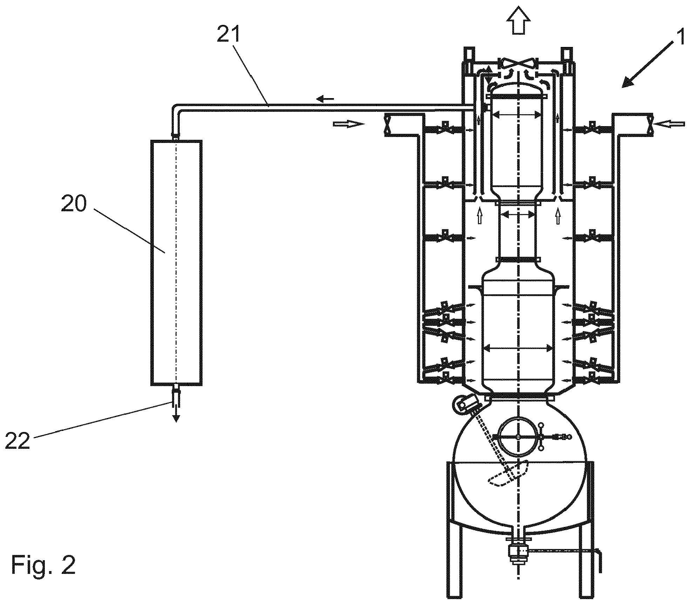

- Figur 2:: die Brennanlage von Figur 1 in verkleinerter Darstellung mit einem Nachkühler;

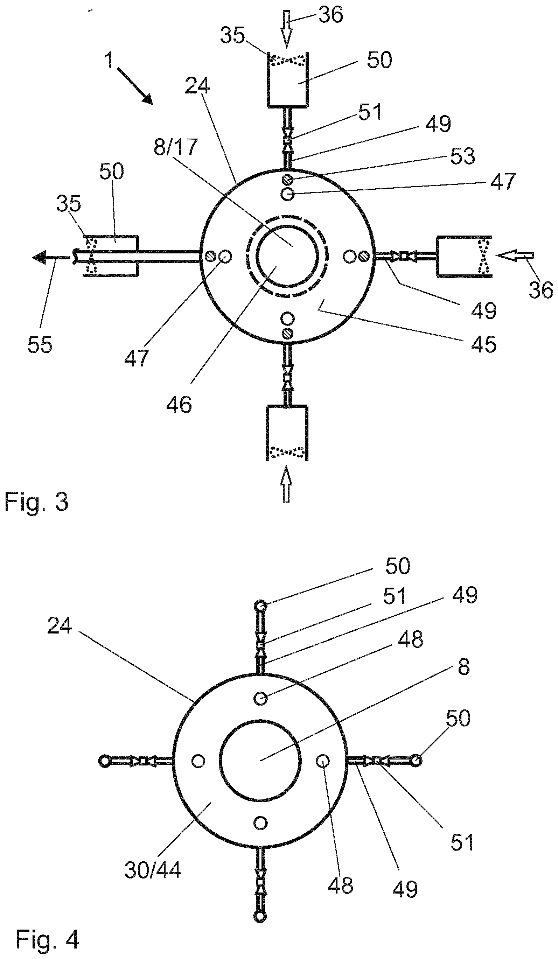

- Figur 3:: einen Schnitt der Brennanlage von Fig. 1 entlang der Linie III - III geschnitten;
- Figur 4:: einen Schnitt der Brennanlage von Fig. 1 entlang der Linie IV - IV geschnitten;

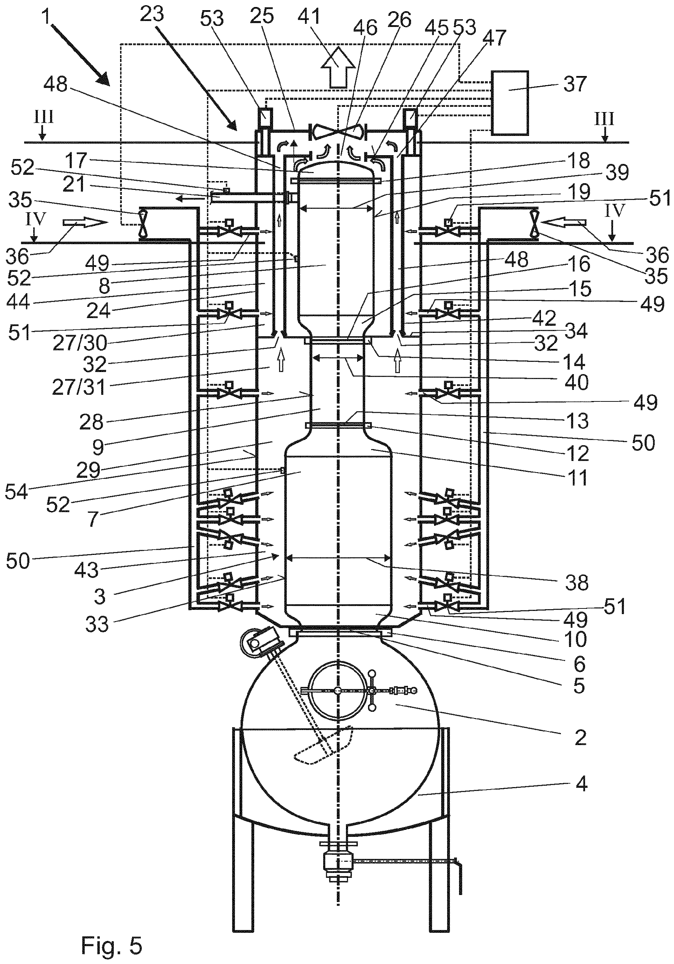

- Figur 5:: eine Seitenansicht der Brennanlage von Fig. 1 mit ihrer oberen Abschlusswand in unterer Stellung und
- Figur 6:: eine weitere Brennanlage entsprechend Figur 2 mit einer Destillationsleitung, die das Destillat vom höchsten Punkt des oberen Klöpperbodens aus dem zweiten Kolben ableitet.

### Beschreibung bevorzugter Ausführungsformen

Eine Brennanlage 1 besteht im Wesentlichen aus einer Brennblase 2 und einem Brennkolben 3.

Die Brennblase 2 ist mit ihrer in vertikaler Richtung unteren Hälfte in einem Heizbehälter 4 angeordnet. Die Brennblase 2 kann in dem Heizbehälter 4 über ein Wasserbad oder durch Wasserdampf erhitzt werden. Die Brennblase 2 weist einen eine erste Verengung 5 bildenden Flansch 6 auf, über den sie mit dem Brennkolben 3 verbunden ist. In der ersten Verengung 5 ist eine nicht weiter dargestellte Schaumbremse angeordnet. Der Brennkolben 3 ist als ein Doppelkolben ausgebildet, der einen ersten zylindrischen Kolben 7 und einen zweiten zylindrischen Kolben 8 aufweist, die über ein zylindrisches Übergangsstück 9 miteinander verbunden sind. Der erste Kolben 7 weist an seinem in vertikaler Richtung unten angeordneten Ende einen ersten Klöpperboden 10 und an seinem in vertikaler Richtung oben angeordneten Ende einen zweiten Klöpperboden 11 auf. Unter Klöpperboden soll sowohl ein gewölbter Boden oder Deckel nach DIN 28011 als auch ein gewölbter Boden ganz allgemein verstanden werden.

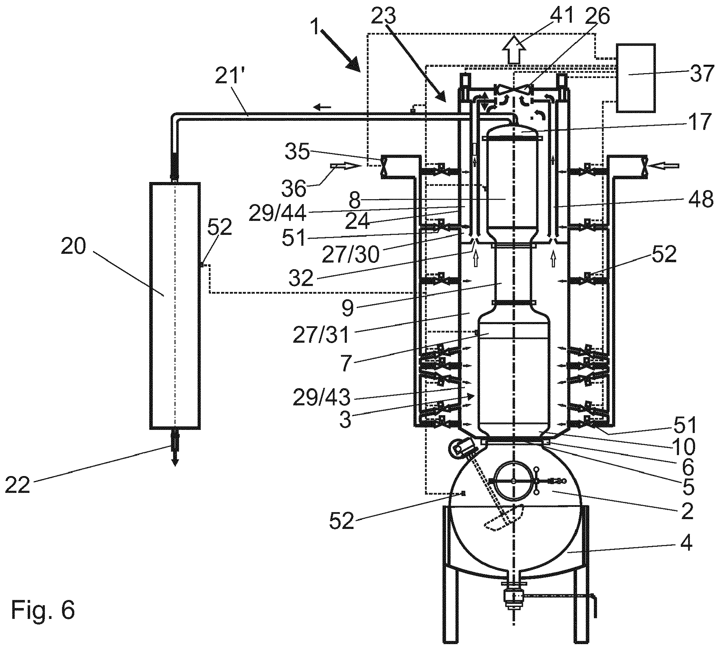

Der erste Klöpperboden 10 ist über den Flansch 6 mit der Brennblase 2 verbunden. Der zweite Klöpperboden 11 ist über einen Flansch 12, der eine zweite Verengung 13 bildet, mit dem in vertikaler Richtung unteren Ende des Übergangsstückes 9 verbunden. Das Übergangsstück 9 ist an seinem oberen Ende über einen Flansch 14 mit einem am unteren Ende des zweiten Kolbens 8 angeordneten dritten Klöpperboden 15 verbunden. Im Bereich des Flansches 14 wird dabei eine dritte Verengung 16 gebildet. Der zweite Kolben 8 weist an seinem in vertikaler Richtung oberen Ende als Abschluss einen oberen Klöpperboden 17 auf, der einen vierten Klöpperboden bildet und der über einen Flansch 18 mit der Wandung 19 des zweiten Kolbens 8 verbunden ist. Dem oberen Klöpperboden 17 benachbart weist der zweite Kolben 8 als Verbindung zu einem Nachkühler 20 eine Destillatleitung (Geistleitung) 21 auf. Entsprechend Figur 6 kann die Destillatleitung 21' auch beispielsweise das Destillat über den höchsten Punkt des oberen Klöpperbodens 17 abführen.

Der Nachkühler 20 weist eine nicht weiter dargestellte Wasserkühlung auf. An seinem in vertikaler Richtung unteren Ende weist der Nachkühler 20 einen Auslass 22 für das Destillat bzw. dessen Vorlauf, Mittellauf und Nachlauf auf.

Die Brennanlage 1 weist eine Luftkühlvorrichtung 23 auf, über die die Wandung 19 des zweiten zylindrischen Kolbens 8 einschließlich der Wandung des oberen Klöpperbodens 17 und des dritten Klöpperbodens 15 sowie die Wandung 33 des ersten zylindrischen Kolbens 7 einschließlich der Wandung des zweiten Klöpperbodens 11 und des ersten Klöpperbodens 10 kühlbar sind.

Die Luftkühlvorrichtung 23 weist eine Umhüllung 24 auf, die mit ihrer Seitenwandung 54 den Brennkolben 3 quer zu seiner Vertikalachse beabstandet zu den Seitenwandungen 33, 19 seiner Kolben 7, 8 und der Wandung 28 des zylindrischen Übergangsstückes 9 umschließt und eine die Kolben 7, 8 ringförmig umschließende Kühlkammer 29 mit einem zwischen Umhüllung 24 und Kolben 7, 8 angeordneten Kühlkanal 27 bildet.

Die Kühlkammer 29 weist im Bereich des Übergangsstückes (9) eine mit Durchgangsöffnungen 32 versehene Zwischenwandung 34 auf, durch die die Kühlkammer 29 in eine dem ersten Kolben 7 zugeordnete untere Kühlkammer 43 mit einem unteren Kühlkanal 31 und eine dem zweiten Kolben 8 zugeordnete obere Kühlkammer 44 mit dem oberen Kühlkanal 30 unterteilt ist. Die obere Kühlkammer 44 weist zwischen dem oberen (vierten) Klöpperboden 17 und der oberen Abdeckung 25 eine in vertikaler Richtung verschiebbare obere Abschlusswand 45 auf. Zum Ventilator 26 der oberen Abdeckung 25 hin weist die obere Abschlusswand 45 eine Zentralöffnung 46 zum Abführen der Abluft 41 aus der Kühlkammer 29, das heißt aus der unteren Kühlkammer 43 und der oberen Kühlkammer 44, auf. Die obere Abschlusswand 45 weist Öffnungen 47 auf, die auf die Durchgangsöffnungen 32 der Zwischenwandung 34 abgestimmt sind und die zur Zwischenwandung 34 hin mit vertikalen Lüftungsrohren 48 fest verbunden sind. Die vertikalen Lüftungsrohre 48 weisen freie Enden 42 auf, die mit den Durchgangsöffnungen 32 der Zwischenwandung 34 korrespondieren. Dabei sind durch Verschieben der oberen Abschlusswand 45 in vertikaler Richtung nach unten die freien Enden 42 der Lüftungsrohre 48 mit den Durchgangsöffnungen 32 der Zwischenwandung 34 verbindbar. Damit können die Durchgangsöffnungen 32 der Zwischenwandung 34 über die Lüftungsrohre 48 direkt mit den Öffnungen 47 der oberen Abschlusswand 45 verbunden werden.

Den Kühlkammern 43, 44 ist über seitliche Zuführkanäle 49 Zuluft 36 in ihre Kühlkanäle 30, 31 zuführbar. Jeweils in vertikaler Richtung übereinander liegende seitliche Zuführkanäle 49 sind über einen vertikalen Zuluftkanal 50 miteinander verbunden. Eingangsseitig weist der vertikale Zuluftkanal 50 jeweils einen Ventilator 35 zum Zuführen von Zuluft 36 auf, die in Verbindung mit dem Ventilator 26 als Abluft 41 abgeführt wird.

Die Leistung des Ventilators 26 in der Abdeckung 25 ist größer als die Leistung der Ventilatoren 35 zum Zuführen der Zuluft 36 in die Kühlkanäle 30, 31. Damit kann in den Kühlkanälen 30, 31 ein Unterdruck erzeugt werden. Die Leistung der Ventilatoren 26, 35 ist durch eine Regeleinrichtung 37 stufenlos regelbar. In den seitlichen Zuführkanälen 49 sind Stellventile 51 angeordnet, die ebenfalls durch die Regeleinrichtung 37 regelbar sind. Weiterhin sind an den Seitenwandungen 19, 33 der Kolben 7, 8 und in der Destillatleitung 21 Temperaturfühler 52 vorgesehen, die jeweils mit der Regeleinrichtung in 37 in Verbindung stehen.

Zum Verschieben der oberen Abschlusswand 45 in vertikaler Richtung ist an der Abdeckung 25 der Umhüllung 24 mindestens ein Stellmotor 53 vorgesehen. Der Stellmotor 53 ist ebenfalls mit der Regeleinrichtung 37 verbunden, so dass die Verschiebung der Abschlusswand 45 über die Regeleinrichtung regelbar ist.

Der erste Kolben 7 weist einen ersten Kolbendurchmesser 38 von 630 mm auf. Der zweite Kolben 8 weist einen zweiten Kolbendurchmesser 39 von 450 mm auf. Das Übergangsstück 9 weist einen Übergangsdurchmesser 40 von 320 mm auf. Damit sind der Übergangsdurchmesser 40 um 49 % kleiner als der erste Kolbendurchmesser 38 und um 29 % kleiner als der zweite Kolbendurchmesser 39. Entsprechend ist der zweite Kolbendurchmesser 39 um 20 % kleiner als der erste Kolbendurchmesser 38.

Unter einem ringförmigen Kühlkanal 27, 30, 31 soll ein im Querschnitt umlaufender, von zwei Wandungen 19, 54 oder 33, 54 oder 28, 54 begrenzter Zwischenraum verstanden werden, bei dem beide Wandungen 19, 54 oder 33, 54 oder 28, 54 im Querschnitt kreisrund oder mindestens eine der Wandungen im Querschnitt eckig, beispielsweise quadratisch, sein kann und die alle ringförmige Kühlkanäle im Sinne dieser Anmeldung aufweisen.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist es grundsätzlich auch möglich, die Zuluft 36 zu temperieren und beispielsweise vorgekühlte Luft zuzuführen.

### Bezugszeichenliste

- 1: Brennanlage
- 2: Brennblase
- 3: Brennkolben
- 4: Heizbehälter
- 5: erste Verengung
- 6: Flansch
- 7: erster Kolben
- 8: zweiter Kolben
- 9: Übergangsstück
- 10: erster Klöpperboden
- 11: zweiter Klöpperboden
- 12: Flansch
- 13: zweite Verengung
- 14: Flansch
- 15: dritter Klöpperboden
- 16: dritte Verengung
- 17: oberer (vierter) Klöpperboden
- 18: Flansch
- 19: Seitenwandung von 8
- 20: Nachkühler
- 21, 21': Destillatleitung (Geistleitung)
- 22: Auslass von 20
- 23: Luftkühlvorrichtung
- 24: Umhüllung
- 25: Abdeckung von 24
- 26: Ventilator von 25
- 27: Kühlkanal
- 28: Seitenwandung von 9
- 29: Kühlkammer
- 30: oberer Kühlkanal
- 31: unterer Kühlkanal
- 32: Durchgangsöffnung
- 33: Seitenwandung von 7
- 34: Zwischenwandung
- 35: Ventilator
- 36: Zuluft
- 37: Regeleinrichtung
- 38: erster Kolbendurchmesser
- 39: zweiter Kolbendurchmesser
- 40: Übergangsdurchmesser
- 41: Abluft
- 42: freies Ende von 48
- 43: untere Kühlkammer
- 44: obere Kühlkammer
- 45: obere Abschlusswand
- 46: Zentralöffnung
- 47: Öffnung von 45
- 48: Lüftungsrohr
- 49: seitlicher Zuführkanal
- 50: vertikaler Zuluftkanal
- 51: Stellventil
- 52: Temperaturfühler
- 53: Stellmotor
- 54: Seitenwandung von 24

## Patentansprüche

1. Brennanlage (1) mit einer Brennblase (2) und einem der Brennblase (2) nachgeordneten Brennkolben (3), wobei der Brennkolben (3) als ein Doppelkolben ausgebildet ist, der einen ersten zylindrischen Kolben (7) aufweist, der über eine erste Verengung (5) mit der Brennblase (2) und über ein zylindrisches Übergangsstück (9) mit einem zweiten zylindrischen Kolben (8) verbunden ist, und wobei eine Luftkühlvorrichtung (23) angeordnet ist, die oberhalb eines den zweiten zylindrischen Kolben (8) in vertikaler Richtung oben abschließenden oberen Klöpperbodens (17) in einer oberen Abdeckung (25) einen Ventilator (26) zum Absaugen von Luft aus einem dem zweiten Kolben (8) benachbarten ringförmigen oberen Kühlkanal (30) aufweist,
**dadurch gekennzeichnet,**
**dass** der Brennkolben (3) quer zu seiner Vertikalachse beabstandet zu Seitenwandungen (33, 19) seiner Kolben (7, 8) von einer Umhüllung (24) umschlossen ist,
**dass** die Umhüllung (24) eine die Kolben (7, 8) ringförmig umschließende Kühlkammer (29) mit einem zwischen Umhüllung (24) und Kolben (7, 8) angeordneten Kühlkanal (27) bildet,
**dass** die Kühlkammer (29) im Bereich des Übergangsstückes (9) eine mit Durchgangsöffnungen (32) versehene Zwischenwandung (34) aufweist, durch die die Kühlkammer (29) in eine dem ersten Kolben (7) zugeordnete untere Kühlkammer (43) mit einem unteren Kühlkanal (31) und eine dem zweiten Kolben (8) zugeordnete obere Kühlkammer (44) mit dem oberen Kühlkanal (30) unterteilt ist,
**dass** die obere Kühlkammer (44) zwischen dem oberen (vierten) Klöpperboden (17) und der oberen Abdeckung (25) eine in vertikaler Richtung verschiebbare obere Abschlusswand (45) mit einer Zentralöffnung (46) zum Ventilator (26) hin aufweist,
**dass** die obere Abschlusswand (45) auf die Durchgangsöffnungen (32) der Zwischenwandung (34) abgestimmte Öffnungen (47) aufweist, die zur Zwischenwandung (34) hin mit vertikalen Lüftungsrohren (48) fest verbunden sind, und
**dass** die Durchgangsöffnungen (32) der Zwischenwandung (34) über die freien Enden (42) der Lüftungsrohre (48) direkt mit den Öffnungen (47) der oberen Abschlusswand (45) verbindbar sind.

2. Brennanlage nach Anspruch 1,
**dadurch gekennzeichnet,**
**dass** den Kühlkammern (43, 44) über seitliche Zuführkanäle (49) Zuluft (36) zuführbar ist.

3. Brennanlage nach Anspruch 2,
**dadurch gekennzeichnet,**
**dass** die Luftkühlvorrichtung (23) mindestens einen Ventilator (35) zum Zuführen von Zuluft (36) über die seitlichen Zuführkanäle (49) aufweist.

4. Brennanlage nach einem der Ansprüche 1 bis 3,
**dadurch gekennzeichnet,**
**dass** die Zuführung von Zuluft und die Ableitung von Abluft durch eine Regeleinrichtung (37) regelbar ist.

5. Brennanlage nach Anspruch 4,
**dadurch gekennzeichnet,**
**dass** die seitlichen Zuführkanäle (49) der Luftkühlvorrichtung (23) Stellventile (51) aufweisen, die durch die Regeleinrichtung (37) regelbar sind.

6. Brennanlage nach einem der Ansprüche 1 bis 5,
**dadurch gekennzeichnet,**
**dass** die obere Abdeckung (25) mindestens einen Stellmotor (53) zum Verschieben der oberen Abschlusswand (45) in vertikaler Richtung aufweist.

7. Brennanlage nach Anspruch 6,
**dadurch gekennzeichnet,**
**dass** der Stellmotor (53) über die Regeleinrichtung (37) regelbar ist.

8. Brennanlage nach einem der Ansprüche 1 bis 7,
**dadurch gekennzeichnet,**
**dass** bei einer in vertikaler Richtung oberen Stellung der oberen Abschlusswand (45) Luft aus der unteren Kühlkammer (43) über die Durchgangsöffnungen (32) der Zwischenwandung (34) in die obere Kühlkammer (44) ableitbar ist und
**dass** bei einer in vertikaler Richtung unteren Stellung der oberen Abschlusswand (45) Luft aus der unteren Kühlkammer (43) über die von den freien Enden (42) der vertikalen Lüftungsrohre (48) abgedeckten Durchgangsöffnungen (32) der Zwischenwandung (34) über die Lüftungsrohre (48) durch die obere Kühlkammer (44) hindurch ableitbar ist.

9. Brennanlage nach einem der Ansprüche 1 bis 8,
**dadurch gekennzeichnet,**
**dass** den Kühlkanälen (30, 31) über mindestens zwei Ventilatoren (35) Zuluft (36) zuführbar ist.

10. Brennanlage nach einem der Ansprüche 1 bis 8,
**dadurch gekennzeichnet,**
**dass** die Leistung des Ventilators (26) in der Abdeckung (25) größer ist als die Leistung des mindestens einen Ventilators (35) zur Zuführung von Luft (36) in die Kühlkanäle (30, 31) und
**dass** in den Kühlkanälen (30, 31) ein Unterdruck erzeugbar ist.

11. Brennanlage nach einem der Ansprüche 4 bis 8,
**dadurch gekennzeichnet,**
**dass** die Leistung der Ventilatoren (26, 35) durch die Regeleinrichtung (37) regelbar ist.

12. Brennanlage einem der Ansprüche 1 bis 11,
**dadurch gekennzeichnet,**
**dass** das zylindrische Übergangsstück (9) einen Übergangsdurchmesser (40) aufweist, der kleiner als der erste Kolbendurchmesser (38) des ersten Kolbens (7) ist und der kleiner als der zweite Kolbendurchmesser (39) des zweiten Kolbens (8) ist, und
**dass** im Übergang vom ersten Kolben (7) zum Übergangsstück (9) eine zweite Verengung (13) und im Übergang vom Übergangsstück (9) zum zweiten Kolben (8) eine dritte Verengung (16) gebildet wird.

13. Brennanlage nach Anspruch 12,
**dadurch gekennzeichnet,**
**dass** zwischen dem ersten Kolben (7) und dem zylindrischen Übergangsstück (9) ein zweiter Klöpperboden (11) angeordnet ist, und
**dass** zwischen dem zylindrischen Übergangsstück (9) und dem zweiten Kolben (8) ein dritter Klöpperboden (15) angeordnet ist.

14. Brennanlage nach einem der Ansprüche 1 bis 13,
**dadurch gekennzeichnet,**
**dass** der zweite Kolben (8) über eine an seinem oberen Ende angeordnete Destillatleitung (21, 21') mit einem Nachkühler (20) verbunden ist.
